# EUROPEAN PATENT SPECIFICATION

(11) **EP 2 991 360 B1**
(45) Date of publication and mention of the grant of the patent: **29.04.2020**
(21) Application number: 15180078.6
(22) Date of filing: 06.08.2015
(51) Int. Cl.: H04N 5/63, H04N 7/20, H04N 5/76, H04N 21/443

(54) **SATELLITE TELEVISION RECEIVER**
SATELLITEN-TV-EMPFÄNGER
RÉCEPTEUR DE TÉLÉVISION PAR SATELLITE

(30) Priority: 27.08.2014 IT MI20141518
(43) Date of publication of application: 02.03.2016
(73) Proprietor: Sky Italia S.R.L., 20138 Milano (IT)
(72) Inventor: DI BUO', Stefania, I-20138 Milan (IT); GIANELLINI, Marco, I-20138 Milan (IT)
(74) Representative: Baroni, Matteo

(56) References cited:
- EP-A1- 1 549 061
- EP-A2- 0 675 655
- WO-A1-2012/022996
- US-A1- 2003 147 531
- US-A1- 2006 004 661
- US-A1- 2011 307 725

## Description

### [TECHNICAL FIELD]

The present invention relates to a low-consumption device for receiving television signals, in particular signals being broadcast via satellite.

### [PRIOR ART]

As is known, the regulations currently in force require compliance with certain parameters relating to the energy consumption of various electronic devices, such as, for example, satellite decoders US 2011/307725 discloses an integrated receiver/decoder for managing power states.

Such parameters are dictated by, among others, the European 1275/2008/EC Tier 2 standard and by the so-called Voluntary Agreement tier2.

Decoders are therefore expected to comply with the following requirements:
1. they must have a low-consumption off state (<0.5W);
2. they must have an "auto power down" mode, according to which the decoder must be able to automatically switch into the low-consumption state as soon as possible;
3. their yearly consumption must not exceed one TEC (Total Energy Consumption) KWh/y - which parameter is based on the complexity of the device and on the shared TV vision protocol.

To this end, some of the decoders currently available on the market are programmed for switching into the low-consumption off state every night for 4 hours (typically from 1.00 am to 5.00 am), or for entering that state after 5 minutes of active stand-by.

The Applicant has noticed that nocturnal power-down leads to significant problems, which may unduly limit the performance of the device, thus compromising the user experience.

In particular, when the decoder is in the low-consumption off state it cannot download the so-called "push" events, i.e. those events (e.g. programs) that the broadcaster decides to provide to the client on the basis of determined criteria.

Push events are periodically sent to the user by the broadcaster by exploiting an internal memory of the decoder. Then, when the user wishes to view such events, the decoder can retrieve the content from the memory and display it.

Typically, the broadcaster updates such contents at night, i.e. in those time slots when more band is statistically available and decoders are less engaged in other activities.

However, the fact that the decoder can be in the low-consumption off state may prevent, as aforesaid, new push events from being downloaded, thus limiting the contents that can be made available off-line to the user.

In addition, when the decoder is in the low-consumption off state, it cannot receive the so-called EMMs (Entertainment Management Messages), which may be useful, for example, for updating the device, for updating the smart card, or for remote booking (programming a recording made by the client via web), etc. In general, when the decoder is in the low-consumption off state, it cannot execute any operation and cannot receive any signal. It can only receive an external power-on command (e.g. from the user's remote control), or wake up at the end of the predefined off time interval.

### [OBJECTS AND SUMMARY OF THE INVENTION]

The present invention aims at overcoming the above-mentioned drawbacks.

In particular, it is one object of the present invention to provide a decoder that, while still complying with the required energy consumption parameters, can interact in a substantially uninterrupted manner with the broadcaster so that all services/contents provided by the latter can be made available to the user, even in the night hours.

It is another object of the invention to provide a decoder that, while still complying with the required energy consumption parameters, poses no substantial limitations to the user experience.

It is a further object of the present invention to provide a decoder that can optimally manage its energy consumption even in the absence of an Internet connection to the broadcaster.

This and other objects are substantially achieved through a decoder as described in the appended claims which define the scope of the invention.

### [BRIEF DESCRIPTION OF THE DRAWINGS]

Further features and advantages will become more apparent from the following detailed description of a preferred but non-limiting embodiment of the invention. This description will refer to the annexed drawings, also provided merely as explanatory and non-limiting examples, wherein:
- Figure 1 shows a block diagram representing a system into which the device according to the invention can be included;
- Figure 2 shows a block diagram representing a device according to the present invention.

### [DETAILED DESCRIPTION OF THE INVENTION]

With reference to the annexed drawings, reference numeral 1 designates as a whole a device in accordance with the present invention.

The device 1 is adapted to be associated with at least one television apparatus 2, in order to allow the latter to reproduce television contents received and processed by the device 1 itself. The device 1 is preferably a satellite decoder, e.g. used for receiving and processing the contents and services provided by a Pay-TV broadcaster.

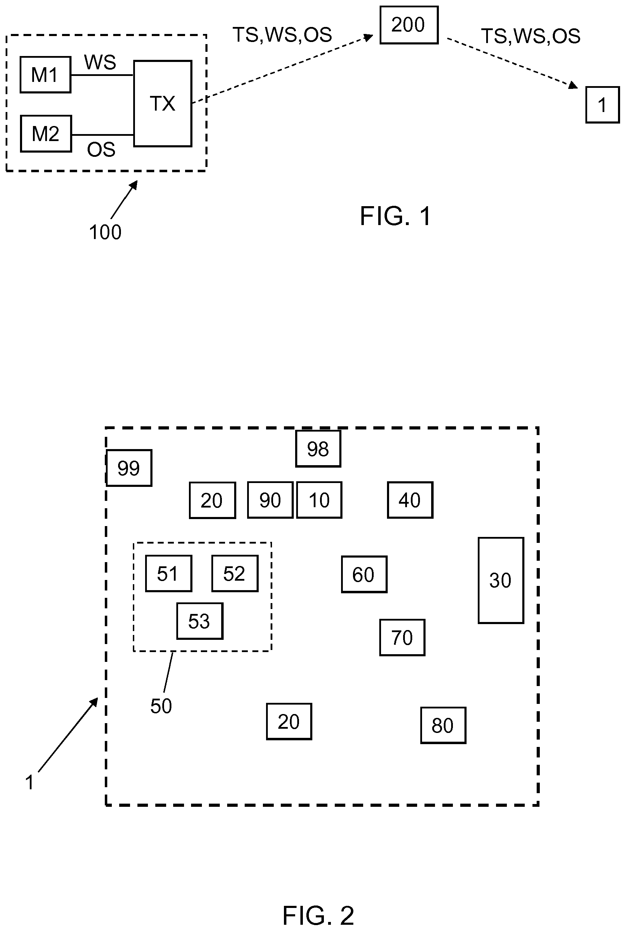

In the block diagram of Figure 1, reference numeral 100 designates as a whole the broadcaster's transmission system. Reference numeral 200 designates a satellite, which forwards the television signals transmitted by the system 100 to the device 1.

It is to be noted that, in this context and in the appended claims, a "broadcast transmission" will refer to the broadcasting of audio/video contents/services to a set of receivers not defined *a priori.*

The device 1 (Figure 2) comprises, first of all, a tuner 10 for receiving television signals TS transmitted via satellite by the broadcaster. The signals TS are preferably received through a satellite parabolic antenna (not shown), to which the tuner 10 is connected by means of a suitable connection 98.

Said television signals TS may concern contents and/or services made available by the broadcaster.

Said television signals TS are transmitted in broadcast mode; they may be intended either for an undefined plurality of users or for specific devices identified by appropriate identification codes.

The device 1 also comprises a processing unit 20 associated with said tuner 10.

The processing unit 20 performs the task of processing the television signals TS and, if necessary, make them usable by the user through a suitable audio/video interface 25 that can be connected to external apparatuses, e.g. television sets.

The processing unit 20 comprises the so-called "CPU core", i.e. the CPU that implements the main and most complex functionalities of the device.

The device 1 further comprises a reception module 30 that allows the device 1 to be activated by means of an external command issued by a user; in practice, said reception module 30 may comprise an infrared section for receiving an activation command from a remote control, and/or a push-button, e.g. arranged on the front panel of the device 1, for receiving the activation command when the push-button is pressed.

The device 1 further comprises a management module 40 for managing the power supply of the device 1 itself with predefined on/off time conditions.

In practice, the management module 40 may be implemented as a simple circuit or device equipped with a memory and capable of implementing a logic of the following type: depending on the time, in accordance with predefined time slots, electric power is selectively supplied to the various components of the device 1.

By way of example, the management module 40 may be configured for keeping the device 1 in a low-consumption off state (which will be described below) for at least one hour every 24 hours. The switching into the low-consumption state preferably occurs after sending a suitable notification to the user, who will thus be allowed, if necessary or desirable, to delay/cancel said switching (e.g. because he/she is viewing contents being received through the device 1).

The device 1 further comprises at least one predefined element 50 selected from: a hard drive 52 for storing audio/video contents, a USB (Universal Serial Bus) interface 51, a DVB-T reception module 53.

Preferably, the device 1 comprises all of the above-listed elements 51, 52, 53.

Preferably, the device 1 further comprises a memory 60, in particular of the DDR (Double Data Rate) type.

Preferably, the device 1 further comprises a broadband section 70 for establishing an Internet connection to the broadcaster, e.g. through an Ethernet port.

Preferably, the device 1 further comprises a smart card reading and management module 80 allowing the device 1 to receive and interface to a smart card possibly inserted by the user. The device 1 is preferably connected, via a connection 99, to an electric power grid, e.g. a household mains.

In accordance with the invention, the device 1 can be switched between three different operating states:
a low-consumption off state;
an intermediate stand-by state;
an active stand-by state.

The device 1 can also be switched into a fully active state, in which substantially all components of the device 1 are power supplied.

In the low-consumption off state, the management module 40 and the reception module 30 are power supplied and active, whereas the tuner 10, the processing unit 20, the audio/video interface 25 and the at least one predefined element 50 are not power supplied.

Preferably, in the low-consumption off state the USB interface 51, the hard drive 52 and the reception module DVB-T 53 are not power supplied.

Preferably, in the low-consumption off state the memory 60 is power supplied.

Preferably, in the low-consumption off state the broadband section 70 is not power supplied. Preferably, in the low-consumption off state the smart card reading and management module 80 is not power supplied.

In practice, in the low-consumption state the device 1 can only receive a power-on command from the user (via remote control or push-button), or can be brought into the intermediate stand-by state at the end of the low-consumption off periods programmed in the management module.

In the intermediate stand-by state, the tuner 10 and the processing unit 20 are power supplied, whereas the audio/video interface 25 and the at least one predefined element 50 are not power supplied.

Preferably, in the intermediate stand-by state the USB interface 51, the hard drive 52 and the reception module DVB-T 53 are not power supplied.

Preferably, in the intermediate stand-by state the memory 60 is power supplied.

Preferably, in the intermediate stand-by state the broadband section 70 is power supplied. Preferably, in the intermediate stand-by state the smart card reading and management module 80 is power supplied.

Preferably, in the intermediate stand-by state the management module 40 is power supplied. Preferably, in the intermediate stand-by state the CPU is in the so-called "halted" state; the contents of the memory 60 are frozen and the memory itself is put into a "self refresh" condition.

Preferably, in the intermediate stand-by state the CPU core is not deactivated.

Preferably, in the intermediate stand-by state a so-called "suspend to RAM" state is realized: the contents of the memory 60, as aforesaid, are frozen. The RAM clock does no longer come from the outside, but is generated within the RAM itself, so as to be significantly slower than the normal operation of the memory 60. The refresh cycles are farther from each other.

Due to the above-described characteristics, the transition from the intermediate stand-by state to the active stand-by state (which will be described below) is particularly fast.

The functional details of the intermediate stand-by state will be provided later on in this description.

In the active stand-by state, the tuner 10, the processing unit 20 and the at least one predefined element 50 are power supplied, whereas the audio/video interface 25 is not power supplied.

In particular, the CPU core belonging to the processing unit 20 is kept in the so-called "wait" state, i.e. waiting to receive/execute commands.

Preferably, in the active stand-by state the USB interface 51 and/or the hard drive 52 and/or the reception module DVB-T 53 are power supplied.

Preferably, in the active stand-by state the memory 60 is power supplied.

Preferably, in the active stand-by state the broadband section 70 is power supplied. Preferably, in the active stand-by state the smart card reading and management module 80 is power supplied.

Preferably, in the active stand-by state the management module 40 is power supplied.

In practice, in the active stand-by state substantially all the components of the device 1 are power supplied, except for the audio/video interface 25.

In one embodiment, in the active stand-by state the hard drive 52 is not power supplied, e.g. in the event that the user should decline the so-called VOD (Video On Demand) push services.

This means that in the active stand-by state the device 1 can execute substantially any type of command, receive substantially any type of information, and carry out substantially any type of processing, but, if the television apparatus (to which the device 1 is connected) is turned on while the device 1 is in this state, nothing will be displayed.

Instead, when the device 1 is in the intermediate stand-by state, it is in a condition of limited operability, but can be woken up - i.e. brought into the operating stand-by state - simply and quickly via a command sent by the broadcaster.

In fact, when the device 1 is in the intermediate stand-by state, the tuner 10 (which is power supplied and active) can receive a wake-up signal WS sent via satellite by the broadcaster.

In the diagram of Figure 1, the wake-up signal WS is generated by a first module M1 included in the broadcaster's transmission system 100. Said signal WS is then transmitted to the satellite by the transmission section TX.

Preferably, the wake-up signal WS comprises a header containing at least one code identifying the device 1 and a piece of information containing at least one wake-up command intended for the device 1.

Advantageously, the tuner 10 is associated with an operating module 90. In the intermediate stand-by state, the operating module 90 is power supplied and active. Preferably, the operating module 90 uses dedicated hardware, substantially configured for executing a single function: the operating module 90 compares the signals received from the tuner 10 with previously stored reference signals. In particular, the operating module 90 compares any EMMs (*Entitlement Management Messages,* such as, for example, the wake-up signal WS) received from the tuner 10 with corresponding stored references. If the received signal coincides with the stored one, then the operating module 90 will activate the processing unit 20 for the latter to make a transition from the "halted" state to a fully operational state. Otherwise, if the received signal turns out to be different from the stored one, no state transition of the processing unit 20 will be induced. Preferably, upon receiving a signal different from the stored one, no action will be taken by the operating module 90.

After the wake-up signal WS is received, the processing unit 20 will switch the device 1 from the intermediate stand-by state to the active stand-by state.

In other words, when the wake-up signal WS is received by the device 1, the device 1 will be switched from the intermediate stand-by state to the active stand-by state preferably by the tuner 10, which physically receives the wake-up signal WS, and by the processing unit 20 and/or by the operating module 90.

Advantageously, after having brought the device 1 into the active stand-by state, the broadcaster can send an operating signal OS containing information and/or commands for the device.

In particular, such information and/or commands may comprise instructions for the execution of a step of acquiring/downloading/recording contents provided by the broadcaster, or also a step of updating the software loaded in the processing unit 20.

In the diagram of Figure 1, the operating signal OS is generated by a second module M2 included in the broadcaster's transmission system 100. Said operating signal OS is then transmitted to the satellite by the transmission section TX.

Preferably, the wake-up signal WS is an *Entitlement Management Message* (EMM) compliant with the ISO/IEC 13818-1 standard.

Preferably, the operating signal OS is an *Entitlement Management Message* (EMM) compliant with the ISO/IEC 13818-1 standard.

Preferably, the processing unit 20 is configured for storing a channel list and/or program information into a non-volatile memory area. This step can be carried out starting from the intermediate stand-by state upon reception of a wake-up signal WS and a subsequent operating signal OS, the latter containing a command for the execution of the storing/updating operation. As an alternative, this step may be carried out when the device 1 is already in the active stand-by state, or while the device 1 is fully operational, i.e. including also the audio/video interface.

Preferably, this step is carried out at least once every day, i.e. once every 24 hours.

In this way it is possible to obtain a quicker activation of the device, which, when turned on, will not have to perform a full scan of the available channels or store a whole list thereof, but will simply have to download any updates and modify the previously stored list accordingly. Similar considerations also apply to the programming of the various channels, which is also stored and updated as described above.

In order to better clarify the effectiveness of the technical solution proposed and claimed herein, the following will consider the acquisition of push contents by the device 1.

As aforesaid in the introductory part of the present text, said acquisition currently takes place at night, when, however, the device also switches into the low-consumption off state.

In accordance with the invention, the device 1 needs not remain in that state for 4 hours. Instead, it can stay in the intermediate stand-by state; when the broadcaster needs to send new push contents, it will first send a wake-up signal WS (as aforesaid, preferably in EMM format) immediately followed by an operating signal OS (also as EMM) for instructing the device 1 to acquire/download the new contents.

Another example of particular interest relates to the so-called remote booking.

This is a functionality that allows a user to program the recording of a certain content by means of a smartphone, a web connection, etc. In practice, by means of an Internet connection (a channel which is independent of those through which the decoder communicates with the broadcaster), the user informs the broadcaster that he/she wants to record a certain content (e.g. a movie, a sports event, a documentary film, etc.).

Currently, if the user's decoder is in the low-consumption off state, the recording instruction cannot be executed.

On the contrary, the present invention allows the device to be kept in the intermediate stand-by state. Therefore, shortly before the content to be recorded starts to be broadcast, the broadcaster will send a wake-up signal WS (preferably an EMM) to the device 1, followed by an operating signal OS containing all the details useful for the device 1 to carry out the recording specified by the user.

The invention offers significant advantages.

First of all, the invention ensures compliance with the required energy consumption parameters, while at the same time allowing the decoders to interact in a substantially uninterrupted manner with the broadcaster, so that all services/contents provided by the latter can be made available to the user, even in the night hours.

Another advantage lies in the fact that the invention, although it is compliant with the required energy consumption parameters, poses no limits to the user experience.

Another advantage relates to the fact that the devices according to the invention can optimally manage their energy consumption even in the absence of an Internet connection to the broadcaster. As a matter of fact, the wake-up signal is sent via satellite, so that it can be appropriately received even by devices not equipped with a broadband connection, or should the Internet connection be down for whatever reasons.

The Applicant has also verified that the implementation of the invention may lead to significant reductions in the user's energy consumptions, thus attaining advantages of economical and eco-environmental nature.

## Claims

1. Device for receiving and decoding television signals, in particular signals being broadcast via satellite, comprising:
a tuner (10) for receiving television signals (TS) being broadcast via satellite by a broadcaster;
a processing unit (20) for processing said television signals (TS);
an audio/video interface (25) for providing contents to an external television set, based on said television signals (TS);
a reception module (30) allowing said device (1) to be activated upon receiving an external command from a user;
a management module (40) for managing the power supply of said device (1) with predefined on/off time conditions;
a hard drive (52) for storing audio/video contents;
wherein said device (1) can be switched between the following states:
a low-consumption off state, wherein the tuner (10), the processing unit (20), the audio/video interface (25) and the hard drive (52) are not power supplied, and the reception module (30) and the management module (40) are power supplied;
an intermediate stand-by state, wherein the audio/video interface (25) and the hard drive (52) are not power supplied, and at least the tuner (10) and the processing unit (20) are power supplied;
an active stand-by state, wherein the audio/video interface (25) is not power supplied, and at least the tuner (10), the processing unit (20) and the hard drive (52) are power supplied wherein, when the device (1) is in the intermediate stand-by state, said tuner (10) and said processing unit (20) are configured for receiving and processing a wake-up signal (WS) transmitted via satellite and for switching said device (1) from the intermediate stand-by state to the active stand-by state, wherein said device is switched from the intermediate stand-by state to the active stand-by state upon receiving said wake-up signal (WS).

2. Device according to claim 1, wherein said processing unit (20) is configured for storing a channel list and/or program information into a memory area.

3. Device according to claim 2, wherein said storing occurs at least once every 24 hours.

4. Device according to any one of the preceding claims, wherein said management module (40) is programmed for keeping the device (1) in the low-consumption off state for a predetermined time interval every 24 hours.

5. Device according to any one of the preceding claims, wherein said tuner (10) and said processing unit (20) are configured for receiving and processing, after receiving said wake-up signal (WS), an operating signal (OS) containing information and/or commands for said device (1).

6. Device according to claim 5, wherein said information and/or commands comprise instructions for the execution of a step of acquiring/downloading/recording contents provided by the broadcaster.

7. Device according to any one of the preceding claims, wherein said reception module (30) is powered also in said intermediate stand-by state and/or in said active stand-by state.

8. Device according to any one of the preceding claims, wherein said management module (40) is powered also in said intermediate stand-by state and/or in said active stand-by state.

9. Device according to any one of the preceding claims, wherein said wake-up signal (WS) comprises a header containing at least one code identifying said device and a piece of information containing at least one wake-up command intended for said device.

10. Device according to any one of the preceding claims, wherein said wake-up signal (WS) is an *Entitlement Management Message* (EMM) compliant with the ISO/IEC 13818-1 standard.

11. Device according to claim 5 or 6, or to any one of claims 7 to 10 when dependent on claim 5 or 6, wherein said operating signal (OS) is an *Entitlement Management Message* (EMM) compliant with the ISO/IEC 13818-1 standard.

12. Device according to any one of the preceding claims, further comprising an operating module (90) associated with said tuner (10) and configured for:
- recognizing said wake-up signal (WS);
- activating said processing unit (20) for switching said device (1) from the intermediate stand-by state to the active stand-by state.

13. System for managing television signals, in particular signals being broadcast via satellite, comprising:
a device (1) according to anyone of the preceding claims;
a first module (M1) for generating a wake-up signal (WS) intended for said device (1), for switching the latter from the intermediate stand-by state to the active stand-by state;
a second module (M2) for generating an operating signal (OS) intended for said device (1),
containing information and/or operating instructions for said device (1);
a transmission section (TX), associated with said first and second modules (M1, M2), for transmitting via satellite said wake-up signal (WS) and said operating signal (OS) to said device (1).

## Patentansprüche

1. Gerät zum Empfangen und zum Dekodieren von Televisionssignalen, insbesondere von Signalen, die über Satellit ausgestrahlt werden, bestehend aus:
einen Tuner (10) zum Empfangen von Fernsehsignalen (TS), die von einem Rundfunksender über Satellit ausgestrahlt werden;
eine Verarbeitungseinheit (20) zum Verarbeiten der Fernsehsignale (TS);
eine Audio-/Videoschnittstelle (25) zum Bereitstellen von Inhalten für ein externes Fernsehgerät auf der Grundlage der Fernsehsignale (TS);
ein Empfangsmodul (30), das es ermöglicht, das Gerät (1) bei Empfang eines externen Befehls eines Benutzers zu aktivieren;
ein Verwaltungsmodul (40) zum Verwalten der Stromversorgung des Geräts (1) mit vorbestimmten Ein-/Ausschaltbedingungen;
eine Festplatte (52) zum Speichern von Audio-/Video-Inhalten;
wobei das Gerät (1) zwischen den folgenden Zuständen umgeschaltet werden kann:
einem verbrauchsarmen Aus-Zustand, in dem der Tuner (10), die Verarbeitungseinheit (20), die Audio/Video-Schnittstelle (25) und die Festplatte (52) nicht mit Strom versorgt werden, und das Empfangsmodul (30) und das Verwaltungsmodul (40) mit Strom versorgt werden;
einen Zwischen-Bereitschaftszustand, in dem die Audio/Video-Schnittstelle (25) und die Festplatte (52) nicht mit Strom versorgt werden und zumindest der Tuner (10) und die Verarbeitungseinheit (20) mit Strom versorgt werden;
einen aktiven Bereitschaftszustand, wobei die Audio/Video-Schnittstelle (25) nicht mit Strom versorgt wird und zumindest der Tuner (10), die Verarbeitungseinheit (20) und die Festplatte (52) mit Strom versorgt werden, wobei, wenn sich das Gerät (1) im Zwischen-Bereitschaftszustand befindet, der Tuner (10) und die Verarbeitungseinheit (20) konfiguriert sind, um ein über Satellit übertragenes Wecksignal (WS) zu empfangen und zu verarbeiten und das Gerät (1) vom Zwischen-Bereitschaftszustand in den aktiven Bereitschaftszustand umzuschalten, wobei das Gerät beim Empfang des Wecksignals (WS) vom Zwischen-Bereitschaftszustand in den aktiven Bereitschaftszustand geschaltet wird.

2. Gerät nach Anspruch 1, wobei die Verarbeitungseinheit (20) konfiguriert ist, um eine Kanalliste und/oder Programminformationen in einen Speicherbereich zu speichern.

3. Gerät nach Anspruch 2, wobei die Speicherung mindestens einmal alle 24 Stunden erfolgt.

4. Gerät gemäß einem der vorhergehenden Ansprüche, wobei das Verwaltungsmodul (40) so programmiert ist, dass es das Gerät (1) alle 24 Stunden für ein vorbestimmtes Zeitintervall in dem verbrauchsarmen Aus-Zustand hält.

5. Gerät nach einem der vorhergehenden Ansprüche, wobei der Tuner (10) und die Verarbeitungseinheit (20) konfiguriert sind, um nach dem Empfang des Wecksignals (WS) ein Betriebssignal (OS) zu empfangen und zu verarbeiten, das Informationen und/oder Befehle für das Gerät (1) enthält.

6. Gerät nach Anspruch 5, wobei die Informationen und/oder Befehle Anweisungen für die Ausführung eines Schritts des Erfassens/des Herunterladens/des Aufnehmen von Inhalten umfassen, die vom Sender bereitgestellt werden.

7. Gerät nach einem der vorstehenden Ansprüche, wobei das Empfangsmodul (30) auch in dem Zwischen-Bereitschaftszustand und/oder in dem aktiven Bereitschaftszustand mit Strom versorgt wird.

8. Gerät gemäß einem der vorstehenden Ansprüche, wobei das Verwaltungsmodul (40) auch in dem Zwischen-Bereitschaftszustand und/oder in dem aktiven Bereitschaftszustand mit Strom versorgt wird.

9. Gerät nach einem der vorhergehenden Ansprüche, wobei das Wecksignal (WS) einen Header umfasst, der mindestens einen Code zur Identifizierung des Geräts und eine Information enthält, die mindestens einen für das Gerät bestimmten Aufweckbefehl enthält.

10. Gerät gemäß einem der vorhergehenden Ansprüche, wobei das Wecksignal (WS) eine *Entitlement Management Message* (EMM) ist, die mit der Norm ISO/IEC 13818-1 übereinstimmt.

11. Gerät nach Anspruch 5 oder 6 oder nach einem der Ansprüche 7 bis 10, wenn es von Anspruch 5 oder 6 abhängig ist, wobei das Betriebssignal (OS) eine *Entitlement Management Message* (EMM) ist, die mit der Norm ISO/IEC 13818-1 übereinstimmt.

12. Gerät nach einem der vorstehenden Ansprüche, das ferner ein mit dem Tuner (10) verbundenes Betriebsmodul (90) umfasst, dass konfiguriert ist zum:
- Erkennen des Wecksignals (WS);
- Aktivieren der Verarbeitungseinheit (20) zum Umschalten des Geräts (1) von dem Zwischen-Bereitschaftszustand in den aktiven Bereitschaftszustand.

13. System zur Verwaltung von Fernsehsignalen, insbesondere von Signalen, die über Satellit ausgestrahlt werden, umfassend:
ein Gerät (1) gemäß einem der vorhergehenden Ansprüche;
ein erstes Modul (M1) zur Erzeugung eines Wecksignals (WS), das für das Gerät (1) bestimmt ist, um diese aus dem Zwischen-Bereitschaftszustand in den aktiven Bereitschaftszustand umzuschalten;
ein zweites Modul (M2) zur Erzeugung eines für das Gerät (1) bestimmten Betriebssignals (OS), das Informationen und/oder Betriebsanweisungen für das Gerät (1) enthält;
einen Übertragungsabschnitt (TX), der mit dem ersten und dem zweiten Modul (M1, M2) verbunden ist, um über Satellit das genannte Wecksignal (WS) und das Betriebssignal (OS) an das Gerät (1) zu übertragen.

## Revendications

1. Dispositif de réception et de décodage de signaux de télévision, notamment de signaux diffusés par satellite, ledit dispositif comprenant :
un syntoniseur (10) destiné à recevoir des signaux de télévision (TS) diffusés par un diffuseur par le biais d'un satellite ;
une unité de traitement (20) destinée à traiter lesdits signaux de télévision (TS) ;
une interface audio/vidéo (25) destinée à fournir des contenus à un téléviseur extérieur sur la base desdits signaux de télévision (TS) ;
un module de réception (30) permettant d'activer ledit dispositif (1) lors de la réception d'une commande extérieure d'un utilisateur ;
un module de gestion (40) destiné à gérer l'alimentation en énergie dudit dispositif (1) avec des conditions de temps de marche/d'arrêt prédéfinies ;
un disque dur (52) destiné à stocker des contenus audio/vidéo ;
ledit dispositif (1) pouvant être commuté entre les états suivants :
un état d'arrêt à faible consommation, le syntoniseur (10), l'unité de traitement (20), l'interface audio/vidéo (25) et le disque dur (52) n'étant pas alimentés en énergie, et le module de réception (30) et le module de gestion (40) étant alimenté en énergie ;
un état d'attente intermédiaire, l'interface audio/vidéo (25) et le disque dur (52) n'étant pas alimentés en énergie, et au moins le syntoniseur (10) et l'unité de traitement (20) étant alimentés en énergie ;
un état de veille actif, l'interface audio/vidéo (25) n'étant pas alimentée en énergie, et au moins le syntoniseur (10), l'unité de traitement (20) et le disque dur (52) étant alimentés en énergie, ledit syntoniseur (10) et ladite unité de traitement (20) étant configurés pour recevoir et traiter un signal de réveil (WS) transmis par satellite et pour commuter ledit dispositif (1) de l'état de veille intermédiaire à l'état de veille actif lorsque le dispositif (1) est dans l'état d'attente intermédiaire,, ledit dispositif étant commuté de l'état de veille intermédiaire à l'état de veille actif lors de la réception dudit signal de réveil (WS).

2. Dispositif selon la revendication 1, ladite unité de traitement (20) étant configurée pour stocker une liste de canaux et/ou des informations de programme dans une zone de mémoire.

3. Dispositif selon la revendication 2, ledit stockage étant effectué au moins une fois toutes les 24 heures.

4. Dispositif selon l'une quelconque des revendications précédentes, ledit module de gestion (40) étant programmé pour maintenir le dispositif (1) à l'état d'arrêt à faible consommation pendant un intervalle de temps prédéterminé toutes les 24 heures.

5. Dispositif selon l'une quelconque des revendications précédentes, ledit syntoniseur (10) et ladite unité de traitement (20) étant configurés pour recevoir et traiter, après avoir reçu ledit signal de réveil (WS), un signal de fonctionnement (OS) contenant des informations et/ou commandes destinées audit dispositif (1).

6. Dispositif selon la revendication 5, lesdites informations et/ou commandes comprenant des instructions d'exécution d'une étape d'acquisition/de téléchargement/d'enregistrement de contenus fournis par le diffuseur.

7. Dispositif selon l'une quelconque des revendications précédentes, ledit module de réception (30) étant alimenté également dans ledit état de veille intermédiaire et/ou dans ledit état de veille actif.

8. Dispositif selon l'une quelconque des revendications précédentes, ledit module de gestion (40) étant également alimenté dans ledit état de veille intermédiaire et/ou dans ledit état de veille actif.

9. Dispositif selon l'une quelconque des revendications précédentes, ledit signal de réveil (WS) comprenant un entête contenant au moins un code identifiant ledit dispositif et une information contenant au moins une commande de réveil destinée audit dispositif.

10. Dispositif selon l'une quelconque des revendications précédentes, ledit signal de réveil (WS) étant un message de gestion de droits (EMM : *Entitlement Management Message*) conforme à la norme ISO/IEC 13818-1.

11. Dispositif selon la revendication 5 ou 6, ou l'une quelconque des revendications 7 à 10 lorsqu'elle dépend de la revendication 5 ou 6, ledit signal de fonctionnement (OS) étant un *message de gestion de droits* (EMM) conforme à la norme ISO/IEC 13818-1.

12. Dispositif selon l'une quelconque des revendications précédentes, comprenant en outre un module de commande (90) associé audit syntoniseur (10) et configuré pour :
- reconnaître ledit signal de réveil (WS) ;
- activer ladite unité de traitement (20) pour commuter ledit dispositif (1) de l'état de veille intermédiaire à l'état de veille actif.

13. Système de gestion de signaux de télévision, notamment de signaux diffusés par satellite, comprenant :
un dispositif (1) selon l'une quelconque des revendications précédentes ;
un premier module (M1) destiné à générer un signal de réveil (WS) destiné audit dispositif (1), pour commuter ce dernier de l'état de veille intermédiaire à l'état de veille actif ;
un deuxième module (M2) destiné à générer un signal de fonctionnement (OS) destiné audit dispositif (1) et contenant des informations et/ou des instructions de fonctionnement destinées audit dispositif (1) ;
une section de transmission (TX) associée auxdits premier et deuxième modules (M1, M2) et destinée à transmettre par satellite ledit signal de réveil (WS) et ledit signal de fonctionnement (OS) audit dispositif (1).
